# EUROPÄISCHE PATENTSCHRIFT

(11) **EP 0 568 858 B1**
(45) Veröffentlichungstag und Bekanntmachung des Hinweises auf die Patenterteilung: **22.10.1997**
(21) Anmeldenummer: 93106438.0
(22) Anmeldetag: 21.04.1993
(51) Int. Cl.: F15B 15/26, B60R 21/13

(54) **Durch Steuerdruck verriegelbare Kolbenbetätigung, insbesondere für den Transport eines Überrollbügels bei Kraftfahrzeugen**
Fluid pressure actuated locking device for a piston, in particular for operating a roll over bar in a vehicle
Dispositif de verrouillage d'un piston commandé par pression, en particulier pour la commande d'une barre antirenversement d'un véhicule

(30) Priorität: 07.05.1992 DE 4215031
(43) Veröffentlichungstag der Anmeldung: 10.11.1993
(73) Patentinhaber: ITT Automotive Europe GmbH, 60488 Frankfurt (DE); DAIMLER-BENZ AKTIENGESELLSCHAFT, 70567 Stuttgart (DE)
(72) Erfinder: Nowack, Reinhard, W-5962 Drolshagen (DE); Reuber, Gerhard, W-5962 Drolshagen (DE); Braun, Achim, W-5223 Nümbrecht (DE); Roumidis, Dimitrios, W-5275 Bergneustadt (DE); Seel, Holger, Dipl.-Ing., D-71134 Aidlingen (DE); Schaible, Kurt, D-71134 Aidlingen (DE)
(74) Vertreter: Portwich, Peter

(56) Entgegenhaltungen:
- DE-A- 2 143 712
- DE-C- 3 732 562
- DE-U- 8 505 101
- GB-A- 2 128 680
- US-A- 2 632 425
- US-A- 3 586 138

## Beschreibung

Zur Betätigung von Überrollbügeln in Kraftfahrzeugen werden eine ganze Reihe von Forderungen gestellt. So soll zum einen der Überrollbügel im Crashfall in Ausfahrrichtung sehr schnell herausbewegt, dann aber nicht mehr in die Gegenrichtung bewegt werden können. Zum anderen soll aber auch die Möglichkeit bestehen, im gefahrlosen Zustand den Bügel in seine Ausgangslage zurückzufahren. Weitere Forderungen sind, daß der Bügel neben der eingefahrenen Ausgangslage und der ausgefahrenen Schutz lage auch noch in Zwischenlagen gefahren und dort verriegelt werden kann. Einzelheiten zu den an derartigen Überrollbügeln gestellten Forderungen sowie einzelne Lösungen hierzu sind in der DE-OS 37 32 562 vorbeschrieben. Bei dem bekannten Überrollbügelsystem wird die schnelle Ausfahrbewegung mit Hilfe einer zusätzlichen Feder erreicht, wobei die langsame Fahrbewegung durch einen hydraulischen Antrieb oder durch einen Elektromotor bewerkstelligt wird. Für die bekannte Lösung wird nicht nur der schnelle Federantrieb, sondern zusätzlich noch ein weiterer Antrieb zum Durchführen der langsamen Bewegung und zum Spannen der Feder benötigt.

Aus der britischen Patentanmeldung GB-OS 21 28 680 ist weiterhin ein hydraulisch arbeitender verriegelbarer Antrieb mit Kolben und Zylinder bekannt, bei dem durch einen Steuerdruck über ein druckgesteuertes Verriegelungsglied der Kolben gegenüber dem Zylinder wahlweise verriegelt bzw. entriegelt werden kann. Erfahrungsgemäß lassen sich durch hydraulische Flüssigkeiten hinsichtlich der Kolbenbewegung keine großen Geschwindigkeiten erreichen.

Aus der DE-A-21 43 712 ist eine verriegelbare Kolbenbetätigung gemäß dem Oberbegriff des Anspruchs 1 bekannt, bei welcher der Kolben als Ringkolben ausgebildet ist und dichtend die Kolbenstange umgreift. Er kann sich gegenüber der Kolbenstange axial zwischen zwei Sicherungsscheiben bewegen, wobei durch diese Relativbewegung kugelförmige Verriegelungselemente in Ver- bzw. Entriegelungsstellung gebracht werden. Der Vorteil besteht darin, die durch Druck ohnedies erreichbare Änderung der Lage des Kolbens gleichzeitig zu Zwecken der Verriegelung bzw. Entriegelung mit auszunutzen. Damit dient der Kolben gleichzeitig als Verriegelungsglied, indem er zum einen in der Verriegelungsstellung die Kolbenstange gegenüber dem Zylinder fixiert und andererseits in der Entriegelungsstellung an der Kolbenstange angreift und diese in der gewünschten Richtung transportiert. Der Kolben ist gegenüber der Kolbenstange mittels einer ersten Druckfeder in Verriegelungsstellung vorgespannt. Die Kolbenstange ist zur eingefahrenen Position hin von einer stärkeren zweiten Druckfeder beaufschlagt, welche nach Ausfahren der Kolbenstange letztere und über die Sicherungsscheibe den Kolben wieder in die eingefahrene Position zurückholt, wenn der den Kolben antreibende Steuerdruck absinkt. Durch diese Konstruktion ergibt sich der Nachteil, daß von der Entriegelung bis zur tatsächlichen Ausfahrbewegung der Kolbenstange aufgrund ihrer Federvorspannung ein erheblicher Druck aufzubringen ist.

Die Erfindung geht daher aus von einer verriegelbaren Kolbenbetätigung der sich aus dem Oberbegriff des Hauptanspruchs ergebenden Gattung und hat sich zur Aufgabe gestellt, eine derartige gattungsgemäße Kolbenbetätigung in einfacher Weise weiterzubilden.

Die Aufgabe wird durch die sich aus dem kennzeichnenden Teil des Hauptanspruchs ergebende Merkmalskombination gelöst. Diese ermöglicht es, in einfacher Weise im Entriegelungszustand den Kolben mit der Kolbenstange zu koppeln, so daß diese dem Kolben in beiden Bewegungsrichtungen zu folgen vermag. Dies dient dazu, ein Rückholen der Kolbenstange in ihre Ausgangslage zu ermöglichen. Um möglichst wenige Druckanschlüsse zu haben, läßt sich in Weiterbildung der Erfindung die Merkmalskombination nach Anspruch 2 anwenden. Dabei kann in Praxis die Kolbenstange bei Überdruck herausgefahren und mit Unterdruck zurückgefahren werden, wobei für beide Bewegungsrichtungen nur ein einziger Druckanschluß benötigt wird.

Will man, wie für einen Überrollbügel notwendig, bei dem erfindungsgemäßen Antrieb erreichen, daß beispielsweise im Crashfall eine von außen in Längsrichtung der Kolbenstange auf diese in Richtung Kolben ausgeübte Kraft eine Blockiereinrichtung auslöst, die in dieser Richtung die Bewegung der Kolbenstange sperrt, so empfiehlt sich in Weiterbildung der Erfindung die Verwendung der Merkmale nach Anspruch 3. Diese Blockiereinrichtung ist in einfacher Weise derart gestaltet, daß sie das Herausfahren der Kolbenstange nicht behindert und bei dieser Bewegungsrichtung der Stange gelöst wird, während bei der umgekehrten Bewegung der Kolbenstange die Blockiereinrichtung die Stange sicher festhält. In der Regel sind somit die erste und dritte und die zweite und vierte Richtung miteinander identisch.

Eine einfache Ausgestaltung für eine derartige Blockiereinrichtung ergibt sich gemäß den Merkmalen nach Anspruch 4.

Dabei wird in Einfahrrichtung die Kolbenstange durch die Keilwirkung der Verkeileinrichtung festgehalten, während bei Bewegung in Gegenrichtung die Keilwirkung gelöst wird.

Um nun gleichwohl zu erreichen, daß, falls erwünscht und ein Crashfall nicht zu befürchten ist, die Kolbenstange zurück in ihre Ausgangslage oder in eine Zwischenstellung gefahren werden kann, empfiehlt sich in Weiterbildung der Erfindung die Anwendung der Merkmale nach Anspruch 5. Dabei wird durch den Entriegelungskolben vor der Ausübung eines die Kolbenstange einfahrenden Drucks (z.B. Unterdrucks) die Entriegelungsstellung der Blockier oder der Verkeileinrichtung bewirkt. Da man durch eine vorangegangene entgegengesetzte Kolbenstangenbewegung eine Entriegelung ebenfalls erreichen kann, muß der Entriegelungskolben aber wenigstens in der Lage sein, ein Verkeilen der Verkeileinrichtung beim Einfahren der Kolbenstange sicher zu verhindern. Einen einfacheren Bewegungsablauf erhält man aber dadurch, daß der Entriegelungskolben sowohl zum Entriegeln der Verkeileinrichtung als auch zum Halten dieser Einrichtung beim Einfahren der Stange in dieser Stelle dient.

Eine besonders.einfache Ausgestaltung für die Verkeileinrichtung ergibt sich durch die Merkmale nach Anspruch 7. Hierbei wird nur eine konisch zulaufende Ringöffnung innerhalb des Arbeitszylinders und an sich handelsübliche Kugeln benötigt. Entsprechende Ausnehmungen in einer hülsenartigen Verlängerung des Entriegelungskolbens können dabei gleichzeitig noch als Käfig für die Kugeln dienen.

Da die Kugeln beim Sperren der Kolbenstangenbewegung erheblichen Belastungen ausgesetzt sind, empfiehlt sich in Weiterbildung der Erfindung die Verwendung der Merkmale nach Anspruch 8. Hierbei werden die einzelnen Kugelebenen zu unterschiedlichen Zeiten beaufschlagt, wobei zuerst die weicheren Kugeln ihre Verriegelungswirkung entfallen und dabei eventuell etwas deformiert werden, während die härteren Kugeln erst beim Auftreten größerer Kräfte wirksam sind und sicherstellen, daß die weicheren Kugeln nicht zerstört werden. Für beide Kugelebenen kann die oben erwähnte hülsenförmige Verlängerung des Entriegelungskolbens als Käfig dienen. Es ist aber die Verwendung von Kugeln nicht notwendig. Es können auch Zylinderrollen oder andere Wälzkörper verwendet werden.

Eine besonders einfache Ausgestaltung der erfindungsgemäßen Kolbenbetätigung ergibt sich durch die Merkmale nach Anspruch 9.

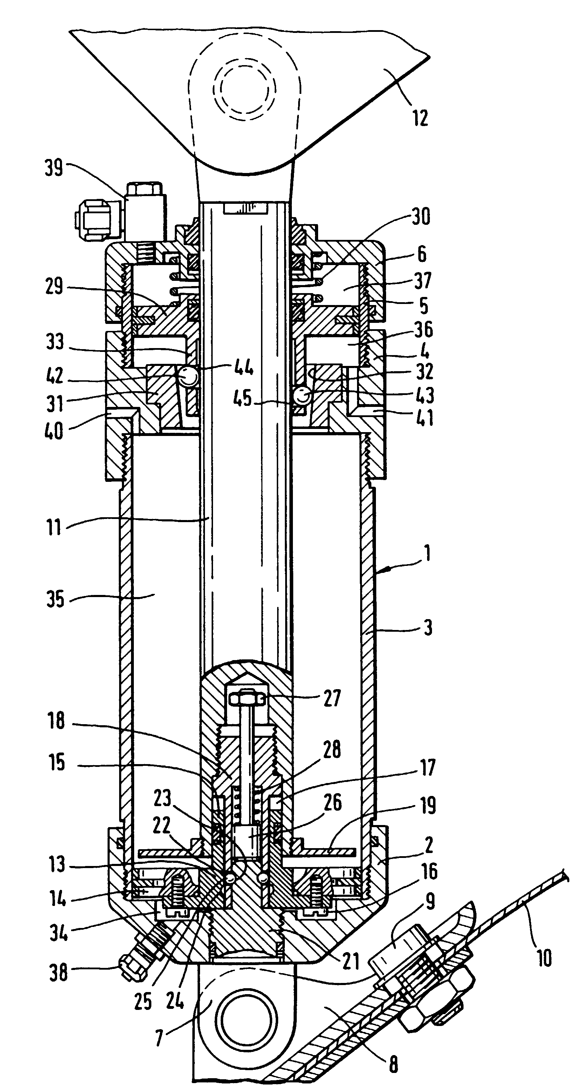

Ein Ausführungsbeispiel der Erfindung wird nachfolgend anhand der Zeichnung erläutert.

In der nachfolgenden Figurenbeschreibung wird zu den einzelnen Bauelementen nur insoweit Stellung genommen, wie sie für die Erfindung maßgeblich sind. Hinsichtlich der an sich üblichen Verwendung einzelner, dem Fachmann bekannter Bauelemente, wird auf die einschlägige Literatur in Ergänzung zu dem in der Einleitung genannten Stand der Technik verwiesen.

Die Figur zeigt einen geschlossenen Zylinder 1, der im wesentlichen aus einem Bodenteil 2, einer ersten Hülse 3, einem Zwischeneinsatz 4, einer zweiten Hülse 5 und einem Zylinderdeckel 6 besteht.

Das Bodenteil 2 ist mit einem ersten Befestigungsansatz 7 versehen, welcher über eine Befestigungslasche 8 und eine Schraubverbindung 9 mit einem Blech 10 verbunden ist. Das Blech 10 ist gegenüber dem Chassis des Kraftfahrzeugs fest angeordnet. Im Bedarfsfall kann der Zylinder 1 um einen Drehpunkt gegenüber der Befestigungslasche 8 drehbar angeordnet sein.

Aus dem Deckel 6 des Zylinders 1 ragt das in der Zeichnung obere Ende einer Kolbenstange 11, an dem ggf. drehbar ein nur abschnittsweise angedeuteter Überrollbügel 12 befestigt ist. Wichtig hierbei ist nur, daß der Überrollbügel 12 durch Bewegung der Kolbenstange 11 gegenüber dem Blech 10 in geeigneter Weise bewegt werden kann.

Der Kolben 13 setzt sich im wesentlichen aus einem an seinen Mantelflächen abgedichteten Kolbenring 14 und einer Führungshülse 15 zusammen, die über Gewindeschrauben 16 miteinander verschraubt sind.

Die Führungshülse 15 des Kolbens 13 gleitet an der inneren Mantelfläche einer gestuften Bohrung 17 am unteren Ende der Kolbenstange 11 und ist somit gegenüber dieser beweglich. Zu Zwecken der Arretierung und für eine zusätzliche Führung sowie zur Erzielung eines Anschlags gegenüber einer Abwärtsbewegung der Kolbenstange 11 ist in diese eine Führungshülse 18 fest eingeschraubt. Mit der Kolbenstange 11 ist weiterhin ein Anschlagteller 19 einstückig verbunden.

In das Bodenteil 2 des geschlossenen Zylinders 1 ist weiterhin noch ein Haltefinger 21 fest eingeschraubt, der in das Innere des Führungeinsatzes 18 und damit in das Innere der Kolbenstange 11 ragt. Sowohl die Führungshülse 15 des Kolbens 13, der Führungseinsatz 18 der Kolbenstange 11 als auch der Haltefinger 21 des Zylinders 1 weisen einander zugeordnete Öffnungen 22,23 und 24 auf, die einer möglichen Verriegelung bzw. Entriegelung des Kolbens 13 gegenüber der Kolbenstange 11 bzw. dem Zylinder 1 dienen. Die Verriegelung geschieht dabei mit Hilfe von als Kugeln ausgestalteten Verriegelungselementen 25, wie weiter unten noch erläutert wird.

Innerhalb des Führungseinsatzes 18 und damit der Kolbenstange 11 ist weiterhin noch ein Entriegelungsstift 26 verschiebbar und über eine Feder 28 vorgespannt gelagert. Ein Herausfallen des Entriegelungsstiftes 26 aus dem Führungseinsatz 18 wird durch eine mit dem Ende des Entriegelungsstiftes 26 verschraubte Mutter 27 verhindert.

Im oberen Teil des Zylinders 1 ist ein gegenüber der zweiten Hülse 5 als auch gegenüber der Kolbenstange 11 dichtend geführter Blockierungskolben 29 vorgesehen, welcher mittels einer Feder 30 gegenüber dem Zylinderdeckel 6 vorgespannt ist. Der Zwischeneinsatz 4 des Zylinders 1 trägt einen Blockierungseinsatz 31, welcher wiederum eine konisch geneigte innere Mantelfläche 32 besitzt. Einstückig mit dem Blockierungskolben 29 ist eine Blockierungshülse 33 verbunden, deren Ausnehmungen 44 in einer ersten Ebene bzw. Ausnehmungen 45 in einer zweiten Ebene zur Führung von Blockierungselementen 42,43 dienen, die als Kugeln ausgestaltet sind.

Durch die beiden Kolben 13 und 29 wird der Innenraum des Zylinders 1 in die Arbeitskammern 34,35,36 und 37 unterteilt.

Die erste Arbeitskammer 34 und die vierte Arbeitskammer 37 sind mit Anschlüssen 38,39 zur Zufuhr von Druckmittel, insbesondere Druckluft, versehen. Die Arbeitskammern 35 und 36 sind untereinander verbunden und haben einen gemeinsamen Auslaß 40 oder zwei zugeordnete Auslässe 40,41.

Die erfindungsgemäße Kolbenbetätigungseinrichtung arbeitet nun wie folgt:

In der in der Figur gezeigten Verriegelungsstellung, in der die Kolbenstange 11 gegenüber dem Zylinder festgehalten ist, greifen die Verriegelungselemente 25 sowohl in die Verriegelungsöffnung 23 des Haltefingers 21 als auch in die Öffnung 22 des Führungsansatzes 18 ein. Damit ist der Führungseinsatz 18 gegenüber dem Haltefinger 21 festgehalten, so daß durch Bewegungsstöße die Kolbenstange nicht nach oben auswandern und somit ihre Lage verändern kann. Die Verriegelung ist insoweit dauerhaft, als die innere Mantelfläche der zum Kolben 13 gehörenden Führungshülse 15 die Verriegelungselemente 25 (Kugeln) in ihrer verriegelnden Lage hält. Die in der Figur gezeigte stabile Ausgangslage setzt voraus, daß in der Arbeitskammer 34 kein Druck herrscht, welcher den Kolben 13 nach oben schiebt.

Um nun die Kolbenstange 11 nach oben herauszufahren ist es notwendig, auf den Anschluß 38 und damit in die erste Arbeitskammer 34 einen Überdruck zu geben, der die nach oben gerichtete Stirnfläche des Kolbens 13 gegen die Anschlagscheibe 19 der Kolbenstange 3 treibt. Damit liegt aber die Öffnung 24 des Kolbens 13 direkt über der zugehörigen Kugel 25, so daß diese zur Führungshülse 15 hin nach außen ausweichen kann. Damit können dann der Kolben 13 und die Kolbenstange 11 gemeinsam nach oben gleiten.

Um dabei zu verhindern, daß die Kugeln 25 in den ersten Arbeitsraum 34 fallen, sobald die innere Mantelfläche des Führungsansatzes 18 von der äußeren Mantelfläche des Haltefingers 21 gleitet und diesen verläßt, legt sich unter der Kraft der Feder 28 der Entriegelungsstift 26 an der oberen Stirnfläche des Haltefingers 21 an und ändert diese Anlage auch dann nicht, wenn der Führungseinsatz 18 nach oben gleitet. Auf diese Weise taucht der Entriegelungsstift 26 nach unten und hält die Kugeln in der Lage, in der sie den Kolben 13 mit der Kolbenstange 11 koppeln. Hat die zylinderförmige Mantelfläche des Entriegelungsstiftes 26 die Kugeln erreicht, so ist eine weitere Abwärtsbewegung nicht mehr notwendig. Diese Lage ist durch die Anschlagwirkung der Mutter 27 festgelegt.

Durch die Aufwärtsbewegung der Kolbenstange 11 werden gleichzeitig die Kugel 42,43 auf der inneren Mantelfläche 32 des Blockierungseinsatzes 31 nach oben bewegt, so daß die Blockierung der Kolbenstange 11 aufgehoben wird. Die Bewegung der Kolbenstange 11 wird daher nur noch durch Reibungsverluste beschränkt. Indem der Kolben 13 aufgrund der in die erste Arbeitskammer 34 eingegebenen Druckluft nach oben gepreßt wird, schiebt der die in der zweiten Arbeitskammer 35 vorhandene Luft aus dem Auslaß 40. Der in der dritten Arbeitskammer 36 möglicherweise entstehende Unterdruck wird durch den Druck in der zweiten Arbeitskammer 35 ausgeglichen. Sind die beiden Kammern 35 und 36 gegeneinander abgedichtet, so kann über den Auslaß 41 Luft in die Arbeitskammer 36 nachgesaugt werden.

Die Kolbenstange kann bei einer entsprechenden Drucksteuerung in einer Mittellage angehalten werden oder aber auch so lang nach oben wandern, bis die Anschlagscheibe 19 an der unteren Fläche des Zwischeneinsatzes 4 anschlägt und damit die Bewegung der Kolbenstange nach oben begrenzt. Eine Rückbewegung der Kolbenstange ist nicht möglich, da aufgrund der dann fehlenden nach oben gerichteten Bewegung der Kolbenstange 11 die Feder 30 über den Blockierungskolben 29 und über die Führungsöffnungen 43,44 die Kugeln 42,43 in hinreichend starkem Eingriff mit der inneren Mantelfläche 32 bringt, so daß auch bei einer Zwischenlage ein Auswandern der Kolbenstange 11 aufgrund von Schüttelbewegungen verhindert ist.

Wird auf die Kolbenstange 11 eine in der Zeichnung von oben gerichtete Kraft ausgeübt, die die Kolbenstange versucht nach unten zu bewegen, so rollen die als Kugeln ausgestalteten Blockierungselemente 42,43 auf der konisch geneigten inneren Mantelfläche 32 ab, wobei der Abstand zwischen der Mantelfläche 32 und der Außenfläche der Kolbenstange immer enger wird. Die Kugeln 42,43 verklemmen sich damit keilförmig zwischen Kolbenstange 11 und innerer Mantelfläche 32 und verhindern somit eine Abwärtsbewegung der Kolbenstange 11.

Da auf diese Weise im Crashfall hohe Kräfte abgefangen werden müssen, sind die Kugeln 42,43 in verschiedenenen Ebenen angeordnet. Die Kugeln 42, die ebenso wie die Kugeln 43 in ihrer Ebene im gleichen Abstand auf dem Umfang der Kolbenstange 11 verteilt sind, bestehen aus einem weicheren Material als die Kugeln 43 und sind in ihren Abmessungen derart dimensioniert, daß sie eine Keilwirkung entfalten, bevor die Kugeln 43 in der zweiten Ebene wirksam werden. Hierbei ergeben sich hinsichtlich der Kugeln 42 möglicherweise kleine Deformationen, die aber unschädlich sind, da die größeren Kräfte ohnedies von den vergleichsweise harten Kugeln 43 abgefangen werden. Andererseits erreicht man durch diese Maßnahme, daß die Blockierungswirkung schon bei vergleichsweise schwachen Kräften sicher wirksam ist und auf diese Weise verhindert wird, daß durch leichte nach unten gerichtete Kräfte die Kugeln 43 auf den harten Flächen der Kolbenstange 11 und der inneren Mantelfläche 32 gleiten können. Es wird somit sicher verhindert, daß die Kolbenstange 11 bei einer allmählichen Abwärtsbewegung nach unten durchrutschen kann.

Selbstverständlich ist es auch möglich, allein mit den weicheren Kugeln 42 auszukommen. In diesem Falle müssen aber die Kugeln 42 nach jedem Crashfall wegen der übergroßen Verformung ausgetauscht werden. Weiche Kugeln sind vorzugsweise nur für niedrige Kräfte (bis ca. 1000 N an der Kolbenstange) ausgelegt.

Will man die Kolbenstange 11 aus ganz ausgefahrener oder zum Teil ausgefahrener Lage nach unten zurückholen, so ist es vorab nötig, die Keilwirkung der Blockiereinrichtung (29 bis 33,42 - 45) zu lösen. Hierzu wird auf den Anschluß 39 ein pneumatischer Unterdruck gegeben (oder auf den Anschluß 41 ein pneumatischer Überdruck), der den Blockierkolben 29 entgegen der Kraft der vorspannenden Feder 30 nach oben bewegt. Dabei greifen die Führungsöffnungen 44,45 an den Kugeln 42,43 an und lösen sie aus ihrer Keilstellung, so daß die Kolbenstange 11 wieder in der Zeichnung nach unten beweglich ist. Diese Lösewirkung läßt sich durch einen Druckstoß über den Druckmittelanschluß 38 in die erste Arbeitskammer 34 unterstützen, die ggf. die Kolbenstange ein kleines Stück nach oben verschiebt, was das Lösen der verkeilten Kugeln durch den Blockierungskolben 29 erleichtert. Der über den Anschluß 39 zugeführte pneumatische Unterdruck in der vierten Arbeitskammer 37 muß solange aufrechterhalten werden, wie die Abwärtsbewegung der Kolbenstange 11 anhält. Ist die gewünschte untere Stellung der Kolbenstange 11 erreicht, wird der Unterdruck in der ersten Arbeitskammer 34 aufgehoben und die Feder 30 sorgt für eine hinreichende Arretierung der Kolbenstange, so daß sie auch bei Schüttelbewegungen ihre Lage beibehält.

Soll die Kolbenstange 11 ihre in der Figur gezeigte unterste Ausgangslage von oben kommend erreichen, so spielen die sich weiter oben im Zusammenhang mit dem Ausfahren der Kolbenstange beschriebenen Vorgänge in umgekehrter Reihenfolge ab.

Dabei fährt die Kolbenstange 11 mit dem über die Kugeln 25 eingerasteten Kolben 13 nach unten, wobei die obere Stirnfläche des Kolbenrings 14 an der Anschlagscheibe 19 anliegt. Schließlich setzt das untere Ende des Verriegelungsstiftes 26 auf das obere Ende des Haltefingers 21 auf, wodurch der Entriegelungsstift 26 nach oben verschoben wird. Hierdurch kann die Mantelfläche des Haltefingers 21 tiefer in die Öffnung des Führungseinsatzes 18 eintauchen, bis schließlich die Öffnungen 23 die Kugeln 25 von unten kommend erreichen, so daß ein hinreichender Sektor der Kugeln 25 in die Öffnungen 23 eintauchen kann. Diese Bewegung der Kugeln wird durch eine entsprechende Formung der Öffnungen 24 in der Führungshülse 15 unterstützt, die zum Kolben 13 gehörend durch den Unterdruck in der ersten Arbeitskammer 34 weiter nach unten wandert. Nachdem die Kugeln 25 in den Öffnungen 22,23 sitzen, wird die Öffnung 24 frei und der Kolben wandert in die in der Figur gezeigte Endlage, wo er auf Anschlag mit einer Schulter des Haltefingers 21 sitzt.

Selbstverständlich können die aus mehreren Einzelteilen zusammengesetzten Funktionsgruppen, wie Kolben 13, Zylinder 1 oder Kolbenstange 11 auch in einer anderen Zusammensetzung der Einzelteile im Rahmen der Erfindung zusammengestellt werden. Auch die in der Zeichnung gezeigten und für die Funktion der erfindungsgemäßen Einrichtung notwendigen Dichtungen können in anderer Form als in der Figur gezeigt, eingefügt werden. Auch kann die erfindungsgemäße Kolbenbetätigung nur mit pneumatischem Überdruck betrieben werden, wenn entsprechende Anschlüsse in den Arbeitskammern 34 bis 37 vorgesehen werden.

Bei einem Überrollbügelsystem wird die hier beschriebene Kolbenbetätigung paarweise angeordnet und die so aufgebauten Abstützelemente dienen als Betätigungs- und Stützelement. Dabei wird das Ein- und Ausfahren sowohl in dem manuell gesteuerten Betrieb mit langsamer Fahrweise (Druck bzw. Unterdruck etwa 1 bar) als auch im Automatikbetrieb beim Crashfall (pneumatischer Überdruck etwa 2,7 bar) mit Druckluft bzw. Vakuum durchgeführt. Die zur Blockiereinrichtung gehörenden Kugeln haben unterschiedlichen Durchmesser und eine unterschiedliche Härte. Die Kugeln der in der Zeichnung oberen Ebene sind weicher und haben einen größeren Durchmesser als die gehärteten Kugeln der unteren Ebene, die aufgrund ihres kleineren Durchmessers etwas später zur Wirkung kommen und nur bei voller Stützkraft mittragen und dann die Hauptstützlast übernehmen.

Durch die Blockiereinrichtung ist über den gesamten Ausfahrweg in jeder Position die Abstützung gegen Einfahren der Kolbenstange 11 gewährleistet. Die Verriegelungseinrichtung verhindert unerwünschte Bewegungen der Kolbenstange und damit des daran befestigten Überrollbügels bei starken Schwingungen, wobei der Hauptkolben gegenüber der Kolbenstange beweglich angeordnet ist. Bei Luftbeaufschlagung öffnet die als Verriegelungsschloß wirksame Verriegelungseinrichtung, indem der Kolben einen Hub von etwa 5 mm gegenüber der Kolbenstange durchführt und hierdurch die Verriegelung der Kolbenstange im Zylinderboden 2 freigibt und sich automatisch gegenüber der Kolbenstange 11 verriegelt.

## Patentansprüche

1. Verriegelbare Kolbenbetätigung, insbesondere für den Transport eines Überrollbügels für Kraftfahrzeuge, bei der ein in einem Zylinder (1) angeordneter und mit Druckmittel beaufschlagter Kolben (13) einerseits über eine Kolbenstange (11) auf ein Stellglied (12) einwirkt und andererseits auch als Verriegelungsglied wirkt, welches im Verriegelungszustand die Kolbenstange (11) über Arretierungselemente (25) gegenüber dem Zylinder (1) verriegelt und bei der die Entriegelung der Kolbenstange (11) durch eine druckgesteuerte Lageänderung des Kolbens (13) erreicht wird und der Kolben (13) im Verriegelungszustand gegenüber der Kolbenstange (11) verschiebbar ist, dadurch **gekennzeichnet**, daß ein in der Kolbenstange (11) geführtes über Federkraft (28) vorgespanntes Koppelelement (26) vorgesehen ist, welches im Entriegelungszustand über die Arretierungselemente (25) den Kolben (3) mit der Kolbenstange (11) koppelt, und so Kolbenstange (11) und Kolben (13) im Eingriff zueinander hält.

2. Kolbenbetätigung nach Anspruch 1, dadurch **gekennzeichnet**, daß der Zylinder (1) mit einem ersten Druckanschluß (34) versehen ist und daß im Entriegelungszustand der Kolben (13) bei einem vorzugsweise im Überdruckbereich liegenden ersten pneumatischen Druck in einer ersten Richtung und bei einem vorzugsweise im Unterdruckbereich liegenden zweiten pneumatischen Druck in einer entgegengesetzten Richtung verschiebbar ist.

3. Kolbenbetätigung nach Anspruch 2, dadurch **gekennzeichnet**, daß an der Kolbenstange (11) eine gerichtet wirkende Blockiereinrichtung (29 bis 33, 42 bis 44) angreift, die bei der Bewegung der Kolbenstange (11) in einer dritten Richtung die Kolbenstange freigibt und bei einer Bewegung der Kolbenstange in eine vierte Richtung festhält, wobei vorzugsweise die erste mit der dritten und die zweite mit der vierten Richtung identisch ist.

4. Kolbenbetätigung nach Anspruch 3, dadurch **gekennzeichnet**, daß die Blockiereinrichtung (29 bis 33, 42 bis 45) mit einer Klemmeinrichtung (31 bis 33, 42 bis 44) versehen ist, deren Klemm- oder Keilwirkung durch eine Bewegung der Kolbenstange (11) in der vierten Richtung aktiviert und deren Keilwirkung bei einer Bewegung der Kolbenstange (11) in der dritten Richtung aufgehoben wird.

5. Kolbenbetätigung nach Anspruch 3 oder 4, dadurch **gekennzeichnet**, daß die Blockiereinrichtung (29 bis 33, 42 bis 45) mit einem Blockierungskolben (29) versehen ist, der durch einen vorzugsweise im Unterdruckbereich liegenden dritten Druck die Blockiereinrichtung (29 bis 33, 42 bis 45) in Entriegelungsrichtung bewegt.

6. Kolbenbetätigung nach einem der Ansprüche 3 bis 5, dadurch **gekennzeichnet**, daß die Blockiereinrichtung (29 bis 33, 42 bis 45) durch eine Feder (30) in Verriegelungsrichtung vorgespannt ist.

7. Kolbenbetätigung nach einem der Ansprüche 4 bis 6, dadurch **gekennzeichnet**, daß Keilelemente (42,43) der Klemmeinrichtung (31 bis 33, 42 bis 45) durch Kugeln (43,44) gebildet sind, die in einer konischen Ringöffnung (32,33) verklemmbar sind, wobei die Ringöffnung durch die äußere Mantelfläche der Kolbenstange (11) und eine zylinderfeste innere Ringmantelfläche (32) gebildet wird.

8. Kolbenbetätigung nach Anspruch 7, dadurch **gekennzeichnet**, daß die verkeilenden Kugeln (42,43) in mindestens zwei axial zueinander beabstandenden Ebenen (42 bzw. 43) angeordnet sind, wobei bei einer Bewegung der Kolbenstange (11) in Blockierrichtung die zu abweichenden Ebenen gehörenden Kugeln (42 bzw. 43) in abweichenden Zeitpunkten mit ihrer verkeilenden Wirkung beginnen.

9. Kolbenbetätigung nach einem der Ansprüche 5 bis 8, dadurch **gekennzeichnet**, daß der Kolben (3) und der Blockierungskolben den Zylinder in mindestens drei Arbeitskammern teilen, von denen die beiden äußeren Kammern (34,37) mit Druckmittelanschlüssen (38,39) und die mittlere Kammer (35,36) mit mindestens einem Entlüftungsanschluß (41) versehen sind.

## Claims

1. Lockable piston actuation, in particular for transporting a roll over bar of automotive vehicles, wherein a piston (13) which is arranged in a cylinder (1) and acted upon by pressure fluid, on the one hand, acts on a control member (12) by way of a piston rod (11) and, on the other hand, acts also as a locking member which, in the locked condition, locks the piston rod (11) by locking elements (25) with respect to the cylinder (1), wherein unlocking of the piston rod (11) is achieved by a pressure-controlled change in position of the piston (13), and the piston (13) in the locked condition is displaceable with respect to the piston rod (11),
**characterized** in that a coupling element (26) is guided in the piston rod (11) and biassed by the force of a spring (28), the coupling element in the unlocked condition coupling the piston (3) with the piston rod (11) by way of the locking elements (25) and thereby maintaining the piston rod (11) and the piston (13) in engagement with each other.

2. Piston actuation as claimed in claim 1,
**characterized** in that the cylinder (1) has a first pressure port (34), and in that in the unlocked condition the piston (13) is displaceable in a first direction in the presence of a first pneumatic pressure which is preferably in the excess pressure range, and is displaceable in an opposite direction in the presence of a second pneumatic pressure which is preferably in the vacuum range.

3. Piston actuation as claimed in claim 2,
**characterized** in that a directionally acting locking device (29 to 33, 42 to 44) is engaged with the piston rod (11) releasing it during movement of the piston rod (11) in a third direction and fixing it during movement of the piston rod in a fourth direction, and preferably the first and the third directions and the second and the fourth directions are identical.

4. Piston actuation as claimed in claim 3,
**characterized** in that the locking device (29 to 33, 42 to 45) includes a clamping device (31 to 33, 42 to 44) having a clamping or keying effect which is activated by a movement of the piston rod (11) in the fourth direction, and the keying effect being eliminated with a movement of the piston rod (11) in the third direction.

5. Piston actuation as claimed in claim 3 or claim 4,
**characterized** in that the locking device (29 to 33, 42 to 45) includes a locking piston (29) which moves the locking device (29 to 33, 42 to 45) in the unlocking direction by way of a third pressure that is preferably in the vacuum range.

6. Piston actuation as claimed in any one of claims 3 to 5,
**characterized** in that the locking device (29 to 33, 42 to 45) is biassed in the locking direction by a spring (30).

7. Piston actuation as claimed in any one of claims 4 to 6,
**characterized** in that keying elements (42, 43) of the clamping device (31 to 33, 42 to 45) are balls (43, 44) which can be jammed in a conical annular opening (32, 33), and the annular opening is provided by the outside peripheral surface of the piston rod (11) and an inside annular peripheral surface (32) on the cylinder.

8. Piston actuation as claimed in claim 7,
**characterized** in that the keying balls (42, 43) are arranged in at least two axially spaced planes (42 or 43), and the balls (42 or 43) of different planes starting at different times with their keying action upon movement of the piston rod (11) in the locking direction.

9. Piston actuation as claimed in any one of claims 5 to 8,
**characterized** in that the piston (3) and the locking piston subdivide the cylinder into at least three working chambers, the two external chambers (34, 37) thereof having pressure fluid ports (38, 39) and the intermediate chamber (35, 36) having at least one venting port (41).

## Revendications

1. Dispositif d'actionnement de piston, verrouillable, notamment pour le ,déplacement d'un arceau de sécurité pour véhicule automobile, dans lequel un piston (13) disposé dans un cylindre (1) et soumis à l'action d'un agent de pression, d'une part, agit sur un organe final (12) par l'intermédiaire d'une tige de piston (11) et, d'autre part, agit aussi en tant qu'organe de verrouillage qui, à l'état de verrouillage, verrouille la tige de piston (11) par rapport au cylindre (1) par l'intermédiaire d'éléments d'immobilisation (25), et dans lequel le déverrouillage de la tige de piston (11) est obtenu au moyen d'un changement de position commandé par pression du piston (13) et, à l'état de verrouillage, le piston (13) est déplaçable par rapport à la tige de piston (11), caractérisé en ce qu'il est prévu un élément d'accouplement (26) qui est guidé dans la tige de piston (11) et est soumis à une précontrainte au moyen d'une force élastique (28) et qui, à l'état de déverrouillage, accouple le piston (3) à la tige de piston (11) au moyen des éléments d'immobilisation (25) et maintient ainsi la tige de piston (11) et le piston (13) en prise l'un avec l'autre.

2. Dispositif d'actionnement de piston suivant la revendication 1, caractérisé en ce que le cylindre (1) est pourvu d'un premier raccord de pression (34) et en ce qu'à l'état de déverrouillage, le piston (13) est déplaçable dans un premier sens lorsque se présente une première pression pneumatique, située de préférence dans le domaine des surpressions, et dans un sens opposé lorsque se présente une seconde pression pneumatique, située de préférence dans le domaine des dépressions.

3. Dispositif d'actionnement de piston suivant la revendication 2, caractérisé en ce qu'un dispositif de blocage (29 à 33, 42 à 44) agissant d'une manière orientée exerce son action sur la tige de piston (11), ce dispositif de blocage libérant la tige de piston lorsque la tige de piston (11) se déplace dans un troisième sens et l'immobilisant lorsqu'elle se déplace dans un quatrième sens, le premier et le troisième sens étant de préférence identiques et le deuxième et le quatrième sens de préférence identiques.

4. Dispositif d'actionnement de piston suivant la revendication 3, caractérisé en ce que le dispositif de blocage (29 à 33, 42 à 45,) est pourvu d'un dispositif de serrage (31 à 33, 42 à 44) dont l'action de serrage ou de coincement est activée par un déplacement de la tige de piston (11) dans le quatrième sens et dont l'action de coincement est supprimée lors d'un déplacement de la tige de piston (11) dans le troisième sens.

5. Dispositif d'actionnement de piston suivant la revendication 3 ou 4, caractérisé en ce que le dispositif de blocage (29 à 33, 42 à 45) est pourvu d'un piston de blocage (29) qui déplace le dispositif de blocage (29 à 33, 42 à 45) dans le sens de déverrouillage au moyen d'une troisième pression, située de préférence dans le domaine des dépressions.

6. Dispositif d'actionnement de piston suivant l'une des revendications 3 à 5, caractérisé en ce que le dispositif de blocage (29 à 33, 42 à 45) est soumis à une précontrainte dans le sens de verrouillage au moyen d'un ressort (30).

7. Dispositif d'actionnement de piston suivant l'une des revendications 4 à 6, caractérisé en ce que des éléments de coincement (42, 43) du dispositif de serrage (31 à 33, 42 à 45) sont constitués de billes (43, 44) qui peuvent être coincées dans une ouverture annulaire conique (32, 33), l'ouverture annulaire étant formée par la surface périphérique extérieure de la tige de piston (11) et une surface périphérique annulaire intérieure (32) fixe par rapport au cylindre.

8. Dispositif d'actionnement de piston suivant la revendication 7, caractérisé en ce que les billes (42, 43) réalisant un coincement sont disposées dans au moins deux plans (respectivement 42 et 43) espacés axialement l'un de l'autre, les billes (respectivement 42 et 43) appartenant à des plans différents commençant leur action de coincement à des instants différents lors d'un déplacement de la tige de piston (11) dans le sens de blocage.

9. Dispositif d'actionnement de piston suivant l'une des revendications 5 à 8, caractérisé en ce que le piston (3) et le piston de blocage divise le cylindre en au moins trois chambres de travail dont les deux chambres extérieures (34, 37) sont pourvues de raccords d'agent de pression (38, 39) et la chambre centrale (35, 36) est pourvue d'au moins un raccord de mise à l'air (41).
